# EUROPEAN PATENT SPECIFICATION

(11) **EP 2 753 835 B1**
(45) Date of publication and mention of the grant of the patent: **15.06.2022**
(21) Application number: 12825417.4
(22) Date of filing: 21.08.2012
(51) Int. Cl.: F16B 35/06, F16B 33/00, F16B 35/00, F16B 43/00, E01B 9/10

(54) **NEGATIVE DRIVE ANGLE**
NEGATIVER ANTRIEBSWINKEL
ANGLE D'ENTRAÎNEMENT NÉGATIF

(30) Priority: 25.08.2011 US 201161527606 P
(43) Date of publication of application: 16.07.2014
(73) Proprietor: Infastech Intellectual Properties Pte. Ltd., Singapore 018981 (SG)
(72) Inventor: LUKES, Richard W., Calmar, Iowa 52132 (US); LUZUM, Randy, Calmar, Iowa 52132 (US); THEISMANN, Mark, Decorah, Iowa 52101 (US); OSBORN, Doug, Decorah, Iowa 52101 (US); SMITH, Robert, Decorah, Iowa 52101 (US); BLAESS, Donald K., Cresco, IA 52136 (US)
(74) Representative: Witte, Weller & Partner Patentanwälte mbB
(86) International application number: PCT/US2012/051662
(87) International publication number: WO 2013/028656

(56) References cited:
- EP-A2- 1 035 336
- WO-A1-00/58056
- WO-A1-2010/150369
- US-A- 3 234 982
- US-A- 3 354 757
- US-A- 3 584 667
- US-A- 5 207 132
- US-A1- 2007 110 545
- US-A1- 2010 129 176
- US-A1- 2011 002 753
- US-B2- 7 226 262

## Description

### BACKGROUND AND SUMMARY

The invention relates to a fastener according to the preamble of claim 1 and to a torque transmission driver according to the preamble of claim 5. Fasteners and torque transmission drivers for torque transmitting systems are well-known in the art. The head of the fastener has a recess or a projection of a particular shape which fits a complimentary shaped projection or recess in the driver. One of the more commonly known torque transmitting systems is the cruciform type drive system commercialized as the PHILLIPS^{®} drive system. See for example, U. S. Patent No. 2,046,837. Numerous forms and shapes of torque transmitting drive systems have been proposed. See for example, U. S. Patent No. 2,397,216.

Spline-type torque transmitting systems of five-lobe and six-lobe configurations have also been well-known. Examples of these five-lobe and six-lobe torque transmitting systems, with their fasteners and drivers, are described in U.S. Patent No. 2,969,250; 3,187,790; 3,584,667; 4,970,922 and 5,279,190. Early versions of such spline-type torque transmission drive systems had square corners, for which corresponding fastener recesses were difficult and expensive to make and resulted in stresses in the fastener and/or driver which lead to fatigue failure with repeated use. Later versions of these five and six lobe spline type torque drive systems had a plurality of opposite intersecting curved surfaces evenly positioned about the 360° circumference of the fastener head or driver bit to form an alternating series of lobes and flutes. These latter torque drive systems overcame some of the problems inherent in the earliest spline type systems, but were not generally capable of retaining a lobe drive angle less than five degrees. Upon application of higher torques, force components would rise causing failure or strip out of the lobes from the fasteners or the drivers. One version of these later spline type torque drive systems, known commercially as the TORX^{®} drive system, had six-lobe and five-lobe configurations based on mating arcuate surfaces designed to attain drive angles within the range of 10° to 20°, an outline of the prior TORX^{®} six-lobe is shown in FIGS. 7 and 8 by curve 205. See U.S. Patent No. 3,584,667.

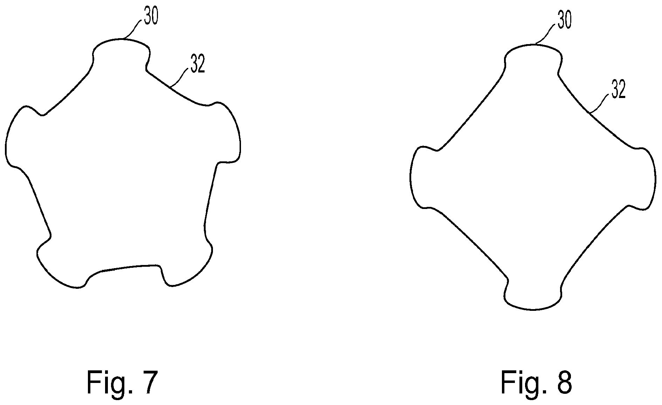

A later version of this spline type torque transmission drive system reduced the drive angle to zero by having both the driven surfaces of the fastener head and the drive surfaces of the torque driver formed by a first series of elliptically curved surfaces with a second series of elliptically curved surfaces alternating there between. One series of these elliptically curved surfaces was convex, while the alternating series of elliptically curved surfaces was concave. The alternating concave and convex elliptically curved surfaces merged smoothly and tangentially to define a series of alternating flutes and lobes extending about the 360° circumference of the fastener head or the driver bit. Both the lobes and the flutes of the fastener head and driver bit were elliptically curved in section. Also, the centers of the elliptically curved lobes and corresponding centers of the elliptically curved flutes were disposed at the apexes of a regular hexagon, although not the same hexagon, due to the alternating nature of these components. See U.S. Patent 5,279,190. An embodiment of this lobular torque transmission drive system has been commercially marketed as TORX PLUS^{®} drive systems. An outline of the prior TORX PLUS^{®} six-lobe driver is shown in FIGS. 7 and 8 by curve 203 with a mating TORX PLUS^{®} fastener recess shown by curve 204.

The difficulty with these latter six-lobe spline-type systems is that there was a narrow point contact between the driver bit and the fastener head at each lobe when torquing of the fastener, and this point contact would change with wear of the torsion driver. This is seen by curves 203 and 204 shown in FIGS. 7 and 8 and described in more detail. With the zero drive angle illustrated by curves 203 and 204 in FIGS. 7 and 8, there was less movement of the contact point between the torque driver and fastener head with wear on the bit of the torque driver, but the lobes of the drive bit were still subject to shear and failure with wear. Additionally, the prior spline-type systems were less effective with thread forming and thread cutting fasteners because the drivers tended to cam out of the fastener, and the drivers wobbled in the fasteners not maintaining axial alignment. All of these problems were accentuated in extremely small size fastener heads and torsion drivers, particularly a small fastener having a major thread diameter less than about 1.0 millimeter (0.039 inch), or alternatively having a major thread diameter less than about 1.6 millimeter (0.063 inch), which tended to deform when in use because of the sizes of the lobes and the clearance tolerances involved.

Document WO 2010/150369 A1 discloses a fastener according to the preamble of claim 1. This document, according to its abstract, states that outer peripheral ends of torque transmitting sections of fitting projections are made to contact with the side wall surfaces of torque transmitting sections of recesses, and tightening torque is transmitted to a screw through force application points which are the portions of the contact. In this process, in an end surface shape perpendicular to the center line of a recess including a force application point, the driving angle of a force perpendicular to the surface is 0° or less. Therefore, the force perpendicular to the surface is applied to the side wall of the recess in a tangential direction about the center axis or in an inward direction. In comparison with a conventional case in which the force perpendicular to the surface acts outwardly, a cam-out effect causing a screw tightening tool to be dislodged from the recess is less likely to occur. As a result, deformation of the recesses and damage to or wear of the fitting projections are suppressed, and the screw can be considerably easily tightened with large tightening torque.

Document EP 1 035 336 A2 discloses a torque transmission driver according to the preamble of claim 5. This document, according to its abstract, relates to a torque transmitting or coupling arrangement for a fastener drive system or the like, wherein the respective externally configured and internally configured components include a body having an axis in which the body has a modified polygonal cross section defined by a perimeter wall. A polygonal central portion positioned within the perimeter wall has an area less than the area of the modified polygonal cross section. A drive wall which forms a portion of the perimeter wall extends on a plane from a proximal end outwardly from the polygonal central portion to a distal end. A first outer wall forming another portion of the perimeter wall has a proximal end joining the distal end of the drive wall at an angle and a distal end terminating on the perimeter wall. The system includes a fastener driver, a threaded fastener and a forming tool for forming a recess in the fastener.

What has continued to be needed is a torsion transmitting system with a fastener head and a torsion driver that remains stable with wear and enable the torque drive to transmit high torque to the head of the fastener with reduced shearing or breaking of the lobes of the driver or fastener. Moreover, needed is a five-lobe or six-lobe torsion transmitting system that would allow higher torques to be applied to fasteners by the torsion transmitting system. These problems were particularly accentuated in small size torque transmission systems where the lobes of both the fastener head and the driver bit were extremely small and the sizes of the lobes and the clearance tolerances corresponding small.

The invention provides a fastener according to claim 1. The fastener is disclosed for use in a torque transmitting system comprising: a fastener having a drive end portion and a lead end portion, the drive end portion adapted to engage a torque transmission driver and the lead portion adapted to fasten or unfasten the fastener, the drive end portion comprising a series of four, five or six lobes and troughs about a rotational axis, and a drive side transition between each lobe and trough on only one side of each lobe forming a negative drive angle between -3° and -10°. The drive side transition of each lobe has a negative drive angle with a length along the lobe of the fastener between 20 and 40% of difference between the A and B radii, where A is the outer radius of a lobe and B is inner radius of a trough. The drive side is the side of each lobe of the fastener from which torsion is applied to the drive end portion of a fastener by a torsion transmission driver in threading the fastener into a substrate as desired.

The drive side transition of each lobe of the drive end portion of the fastener may be a negative drive angle between -4° and -6°.

The drive side transition of each lobe of the drive end portion of the fastener forming the negative drive angle has between 0.025 millimeter (0.001 inch), such as for small fasteners having a major thread diameter less than about 1.0 millimeter (0.039 inch), and 0.05 millimeter (0.020 inch) in length, such as for fasteners having a major thread diameter less than about 3.0 millimeter (0.12 inch), along the lobe.

The drive end portion of the fastener may have an externally configured drive surface adapted to engage a torque transmission driver or an internally configured drive surface adapted to engage a torque transmission driver. In either case, the clearance between the drive end portion of the fastener and a bit of the torque transmission driver may be less than 0.05 millimeter (0.002 inch).

The invention provides a torque transmission driver according to claim 5. The torque transmission driver comprising: a main body having a first end portion and a second end portion, the first end portion adapted to receive and transmit torque from a torque generation source, the second end portion opposite the first end portion comprising a series of four, five or six lobes and troughs about a rotational axis, and a drive side transition between each lobe and trough on only one side of each lobe forming a negative drive angle between -3° and -10°. The drive side transition of each lobe has a negative drive angle with a length along the lobe and trough between 20 and 40% of difference between the radii A and B, where A is the outer radius of the lobe and B is inner radius of the trough. The drive side is the side of each lobe of the torque transmission driver from which torsion is applied to a drive end portion of a fastener by the torsion driver in threading the fastener into a substrate as desired.

The drive side transition of each lobe of the second end portion of the torque transmission driver may be a negative drive angle between -4° and -6°.

The drive side transition of each lobe of the second end portion of the torque transmission driver may have negative drive angle has between 0.025 and 0.05 millimeter (0.001 and 0.020 inch) in length along the lobe, depending on the size of the fastener and the torsion driver.

The second end portion of the torque transmission driver fastener may have an externally configured drive surface adapted to engage a fastener or an internally configured drive surface adapted to engage a fastener. In either case, the clearance between the second end portion of a bit of the torque transmission driver and a drive portion of a fastener may be less than 0.002.

Other details, objects and advantages of the present torques transmitting system and fasters and torsion drivers thereof will be apparent as the following description of embodiments of the invention proceeds.

### BRIEF DESCRIPTION OF THE DRAWINGS

The drawings illustrate specific embodiments of the torque transmission system of the present invention with its fasteners and torsion drivers in which:
FIG. 1 is a fragmentary isometric view of a six-lobe fastener and a partial bit of the torsion driver illustrating an embodiment of the present invention,
FIG. 2 is an elevational view of a six-lobe bit of a torque transmission driver and fragmentary view of a six-lobe fastener shown in cross-section illustrating an embodiment of the present invention,
FIG. 3A is a cross-sectional view showing the engagement of a six-lobe torsion driver with a recess in a six-lobe fastener head illustrating an embodiment of the present invention,
FIG. 3B is a detail of the cross-sectional view of the driver bit of FIG. 3A showing lobe of a six-lobe torsion driver,
FIG. 3C is a detail of the cross-sectional view of the fastener recess of FIG. 3A showing lobe of a six-lobe fastener recess,
FIG. 4 is an isometric view of a part of a fastener with a projected fastener head and a partial bit of the torsion driver illustrating an alternative embodiment of the present invention,
FIG. 5 is an elevational view of a bit for a torsion driver in relation to a partial cross-sectional view of the fastener with a protruded head illustrating an alternative embodiment of the present invention,
FIG. 6A is a cross-sectional view illustrating engagement of six-lobe torsion driver with a projecting head of a fastener illustrating an alternative embodiment of the present invention,
FIG. 6B is a detail of the cross-sectional view of the driver bit of FIG. 6A showing lobe of a six-lobe torsion driver,
FIG. 6C is a detail of the cross-sectional view of the fastener recess of FIG. 6A showing lobe of a six-lobe fastener recess,
FIG. 7 is an alternative cross-sectional view through a five-lobe torsion driver illustrating an embodiment of the present invention,
FIG. 8 is another alternative cross-sectional view through a four-lobe torsion driver illustrating an embodiment of the present invention,
FIG. 9 is an outline illustrating the configuration of the six-lobe fastener head and six-lobe torsion driver of the present invention as well as a prior art six-lobe torsion drivers and six-lobe fastener heads for comparison, and
FIG. 10 is an enlarged view of a portion of FIG. 9 identified as detail 10 in FIG. 9.

### DETAILED DESCRIPTION OF THE DRAWINGS

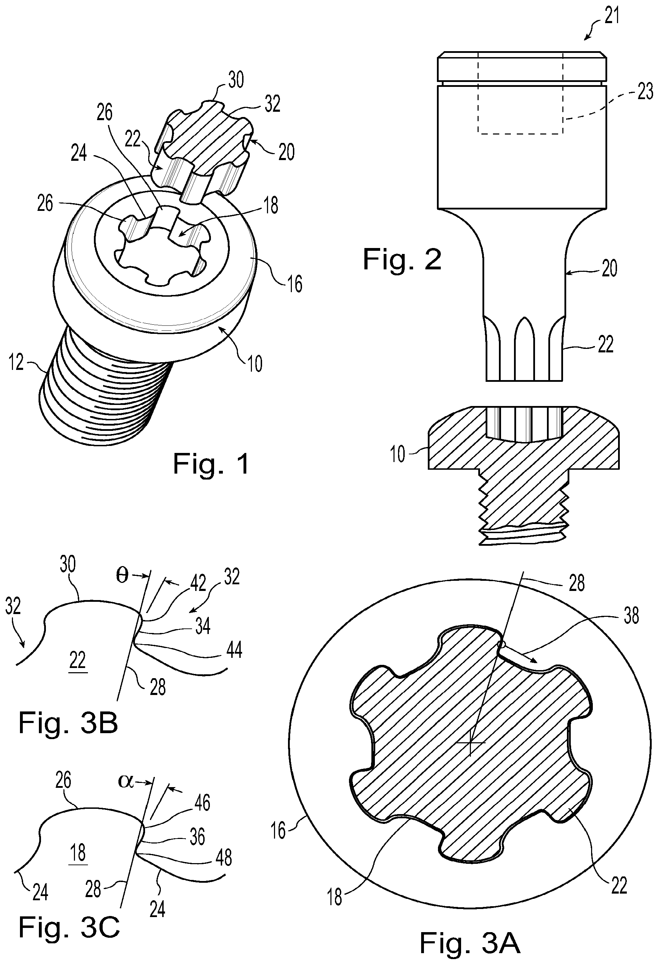

Referring to FIGS. 1 and 2, there is illustrated a fastener 10 and a torsion driver 20 of a six lobe torque transmission system. The fastener 10 has a shank having threads forming a lead portion 12 of the fastener 10 adapted to thread the fastener 10 into a substrate as desired. The fastener 10 also has a head portion 16 having internally configured drive surfaces forming a six-lobe recess 18, or alternatively, a five-lobe recess, illustrated by way of the example cross-section in FIG. 7, adapted to mate with a correspondingly configured bit portion 22 of the torsion driver 20 that is adapted to transmit torque driving forces to the fastener 10. The recess 18 of fastener 10 is configured with a series of alternating lobes 24 and troughs 26 positioned around the 360° circumference of recess 18. Correspondingly, bit portion 22 of torsion driver 20 has drive surfaces forming alternating lobes 30 and troughs 32 positioned around the 360° circumference forming six alternating lobes 30 and troughs 32, complementing the shape of the lobes 24 and troughs 26 of the recess 18 of the fastener head 16.

The bit portion 22 of the torsion driver 20 may have a flat end surface as shown in FIG. 2. Alternatively, the bit portion 22 may have a protruding lead end such as disclosed in the international application serial number PCT/US2011/043198, filed July 7, 2011, entitled Torque Transmission Driver. The driver 20 includes an end portion 21 adapted to receive and transmit torque from a torque generation source, such as a power driver, manually operated driver handle, drill motor, or other torque generation source as desired. The end portion 21 may include a recess 23, such as shown in dashed line in FIG. 2, for engaging the torque generation source. Alternatively, the end portion 21 may be in the form of a projection or shank (not shown) adapted to receive and transmit torque from a torque generation source.

Referring to FIG. 3A, the bit portion 22 of torsion driver 20 is shown assembled into the recess 18 of the head portion 16 of fastener 10 with lobes 30 and trough 32 of bit portion 22 of torsion driver 20 engaging the troughs 26 and the lobes 24 of the recess 18 in fastener head 16, respectively. As shown in FIGS. 3A and 3B, between each of the lobes 30 and trough 32 of the bit portion 22 of torsion driver 20 is provided a drive side transition 34 forming a negative drive angle θ between -2 and -10° extending between an outer transition radius 42 and an inner transition radius 44. The drive angle θ is measured between the drive side transition 34 and a radial line 28 extending from the rotational axis and tangent to the inner transition radius 44 as shown in FIG. 3B. As shown in FIG. 3C, between each lobe 24 and trough 26 of recess 18 of fastener head 16 of fastener 10 is provided a drive side transition 36 forming a negative drive angle α between -2 and -10° extending between an outer transition radius 46 and an inner transition radius 48. The drive angle α is measured between the drive side transition 36 and a radial line 28' extending from the rotational axis and tangent to the inner transition radius 48 as shown in FIG. 3C. The drive side transition 34 in bit portion 22 and the drive side transition 36 in recess 18 of fastener head 16 both may have a negative angle between -3 and -10°. In yet another alternative, the drive side transition 34 in bit portion 22 and the drive side transition 36 in recess 18 of fastener head 16 both may have a negative angle between -4 and -6°. With this configuration, the clearance between the drive side transition 34 of the bit portion 22 of the torsion driver 20 and the drive side transition 36 of recess 18 in the fastener head 16 may be maintained less than 0.05 millimeter (0.002 inch). This tolerance provides for effective and extended use of the torsion driver 20 with fasteners 10. Typically, the fastener drive angle α is approximately the same as the bit drive angle θ to provide surface to surface contact. Alternatively, the fastener drive angle α may be greater or less than the bit drive angle θ to accommodate clearances between the fastener and the driver.

In any case, the drive side transitions 34 of the bit portion 22 and the drive side transition 36 in recess 18 of the fastener head 16 engage when torsion forces 38 are applied to the head portion 16 of fastener 10 through bit portion 22 by rotation of the torsion driver 20. Both the driver side transition 34 of the bit portion 22 and the driver side transition 36 of recess 18 of fastener head 16 provide an engagement length between each of the lobes and troughs of the bit portion 22 of the torsion driver 20 and the recess 18 in the fastener head 16 ranging from 20 to 40% of the difference between radii A and B, where A is the outer radius of the lobe of the bit portion 22 for recess 18 and radius B is the inner radius of the trough of bit portion 22 of recess 18. The actual length of the drive side transition 34 or 36 may be between 0.025 and 0.05 millimeter (0.001 and 0.020 inch) in length depending on the size of the fastener 10 and torsion driver 20. For example, the length of the drive side transition may be between 0.025 millimeter (0.001 inch) and about 0.13 millimeter (0.005 inch) for small fasteners having a major thread diameter less than about 1.0 millimeter (0.039 inch). That distance may be in larger fasteners, for example, between about 0.13 millimeter (0.005 inch) and about 0.38 millimeter (0.015 inch) in length for fasteners having a major thread diameter between about 1.0 millimeter (0.039 inch) and 3.0 millimeter (0.12 inch), and will proportionately be scaled upwardly and downwardly in length as the size of the fastener 10 and the torsion driver 20 increase and decrease respectively. The drive side transition 34 of the torsion driver 20 and drive side transition 36 of recess 18 of the fastener head 16 allow for spreading the torsion forces when tightening of the fastener 10 and with a component of torsion forces inwardly as shown by arrow 38 in FIG. 3A. Moreover, these torsion forces 38 exerted by the bit portion 22 of the torsion driver 20 on the fastener head 16 and the fastener through recess 18 remain relatively stable with wear of the bit portion 22 of torsion driver 20.

The recess 18 of the fastener head 16 and the correspondingly configured bit portion 22 of the torsion driver 20 are configured for the bit portion 22 to be inserted into the recess 18 a depth sufficient to permit good application of torque from the driver bit to the fastener. For example, a small fastener having a major thread diameter less than about 1.0 millimeter (0.039 inch) may have an effective engagement depth of the drive surfaces of less than 0.25 millimeter (0.010 inch). For larger fasteners, such as having a major thread diameter greater than about 6.0 millimeter (0.236 inch), the effective engagement depth may be 1.5 millimeter (0.06 inch), or greater.

It should be noted that similar drive side transitions may be provided between the lobes and troughs for loosening of fasteners by application of torsion forces through the torsion driver. This added feature may be useful for fasteners designed to be unfastened for disassembly. In applications for disassembly, the drive side transition may include a drive angle forming a positive drive angle or a negative drive angle as desired. However, that would be only a fraction of the applications, since most fasteners are tightened and positioned for use during the useful life of the assembly in which they are fastened. In addition, the drive side transitions are provided for disassembly and care must be taken to ensure that the lobes of the transition driver are not weakened, limiting the useful life of them.

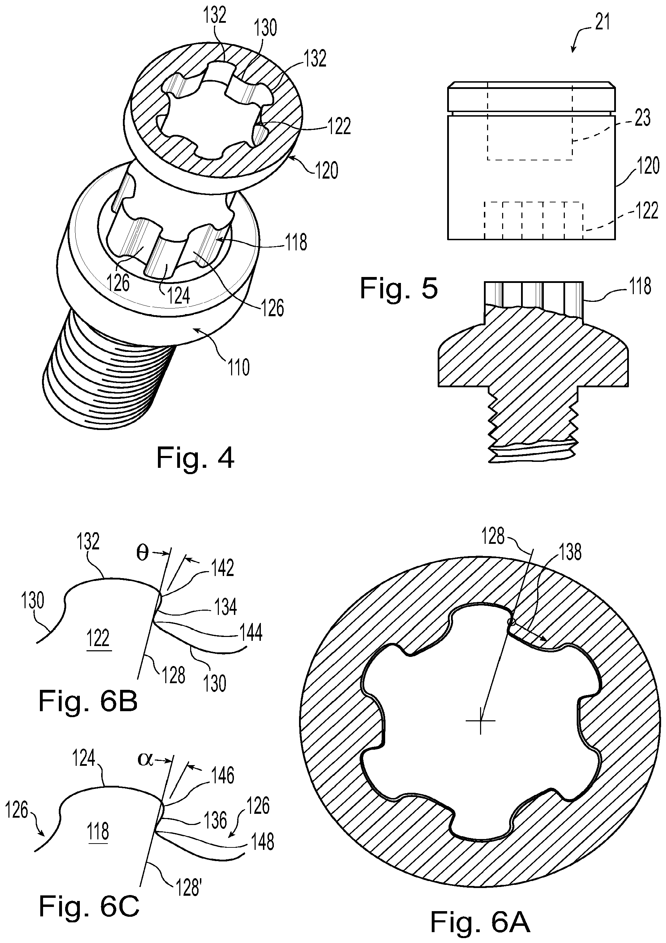

Referring to FIGS. 4 and 5, a fastener 110 and torsion driver 120 of the six lobe torsion transmission system is illustrated in which the fastener 110 has an externally configured driving surfaces 118 configured in the form of a series of alternating lobes 124 and troughs 126 positioned around the 360° circumference of the external surfaces 118. Correspondingly, bit portion 122 of torsion driver 120 has alternating lobes 130 and troughs 132 positioned around the 360° circumference forming six alternating lobes 130 and troughs 132, complementing the shape of the lobes 124 and troughs 126 of the external surfaces 118 of the fastener head 116 of fastener 110.

Referring to FIG. 6A, the bit portion 122 of torsion driver 120 is shown assembled over the external drive surfaces 118 of the head portion 116 of fastener 110, with lobes 130 and troughs 132 of bit portion 122 of torsion driver 120 engaging the troughs 128 and lobes 126 of the external surfaces 118 of fastener head 116, respectively. As shown in FIG. 6A and 6B, between each of the lobes 130 and troughs 132 of the bit portion 122 of the torsion driver 120 is provided a drive side transition 134 forming the negative drive angle θ between -2 and -10° extending between an outer transition radius 142 and an inner transition radius 144. The drive angle θ is measured between the drive side transition 134 and a radial line 128 extending from the rotational axis and tangent to the inner transition radius 144 as shown in FIG. 6B. As shown in FIG. 6C, between each lobe 124 and trough 126 of external surfaces 118 of the fastener head 116 of the fastener 110 is provided a drive side transition 136 forming the negative drive angle α between -2 and -10° extending between an outer transition radius 146 and an inner transition radius 148. The drive angle α is measured between the drive side transition 136 and a radial line 128' extending from the rotational axis and tangent to the inner transition radius 148 as shown in FIG. 6C. The drive side transition 134 in bit portion 122 and the drive side transition 136 in recess 118 both may have a negative angle between -3 and -10°. In yet another alternative, the drive side transition 134 of bit portion 122 and the drive side transition 136 in external surfaces 118 of fastener head 116 both may have a negative drive angle between -4 and -6°. Again, with this configuration, the clearance between the drive side transition 134 of bit portion 122 of the torsion drive 120 and the drive side transition 136 of external surfaces 118 of the fastener head 116 may be maintained less than 0.05 millimeter (0.002 inch). This tolerance provides for effective and extended use of the torque driver 120 with multiple fasteners 110.

The drive side transitions 134 of the bit portion 122 and the drive side transition 136 in external surfaces 118 of the fastener head 116 engage when the torsion forces 138 are provided to the head portion 116 of fastener 110 by torsion driver 120 through bit portion 122. Both the drive transition 134 of the bit portion 122 and the drive side transition 136 of external surfaces 118 of fastener head 116 provide an engagement length between each of the lobes and troughs of the bit portion 122 of the transmission driver 120 and the external drive surfaces 118 of the fastener head 116 ranging from 20 to 40% of the distance between radii A and B, where A is the outer radius of the lobe of the bit portion 122 of external surfaces 118 and radius B is the inner radous of the trough of the bit portion 122 of external surfaces 118. The actual length of the drive side transition 134 or 136 may be between 0.025 and 0.05 millimeter (0.001 and 0.020 inch) in length depending on the size of the fastener 110 and the torsion driver 120. For example, the length of the drive side transition may be between 0.025 millimeter (0.001 inch) and about 0.13 millimeter (0.005 inch) for fasteners having a major thread diameter less than about 1.0 millimeter (0.039 inch). That distance may be in larger fasteners, for example, between about 0.13 millimeter (0.005 inch) and about 0.38 millimeter (0.015 inch) in length for fastener sizes for fasteners having a major thread diameter between about 1.0 millimeter (0.039 inch) and 3.0 millimeter (0.12 inch), and will be proportionately scaled up or down in length as the size of the fastener 110 and the torsion driver 120 increases or decreases respectively. The drive side transition 134 of the transition driver 120 and the drive side transition 136 of external surfaces 118 of the fastener head 116 allow for spreading of the torque forces when tightening of the fastener 110 and with a component of transmission forces inwardly as shown by arrow 138 in FIG. 6. However, these torsion forces 138 exerted by the bit portion 122 of the torsion driver 120 on the fastener head 116 and the fastener through external surfaces 118 remain relatively stable with wear of the bit portion 122 of the driver 120.

The external drive surfaces 118 of the fastener head 116 and the correspondingly configured bit portion 122 of the torsion driver 120 are configured for the external drive surfaces 118 to be inserted into corresponding surfaces in the bit portion 122 a depth sufficient to permit good application of torque from the driver bit to the fastener. For example, a small fastener having a major thread diameter about 1.0 millimeter (0.039 inch) may have an effective depth engagement of the external drive surfaces into the bit recess of less than 0.25 millimeter (0.010 inch). For larger fasteners, such as having a major thread diameter greater than about 6.0 millimeter (0.236 inch), the effective depth engagement may be 1.5 millimeter (0.06 inch), or greater.

Again, as with the embodiment illustrated in FIGS. 1, 2 and 3 with the fastener having internally configured drive surfaces shown by recess 18, the present embodiment shown in FIGS. 4, 5 and 6 with externally configured drive surfaces on the fastener may be provided with additional similar drive side transitions between the lobes and the troughs for loosening of the fasteners by application of torsion forces through the torsion driver. As with the embodiment shown in FIGS. 1, 2 and 3, this added feature may be useful for fasteners embodied as shown in FIGS. 4, 5 and 6 to be unfastened for disassembly, and may have a positive or negative drive angle. However, as with the embodiment shown in FIGS. 1, 2 and 3, there is likely to be only a fraction of the applications because most fasteners are tightened and positioned for use during the useful life of the assembly for which they are used. In addition, as with the embodiment shown in FIGS. 1, 2 and 3, the present embodiment of the invention with drive side transitions for unfastening may be done with care to avoid weakening of the lobes of the transition driver inhibiting the useful life of the driver.

It is contemplated that the fasteners 10, 110 and drivers 20, 120 of the present torque transmission system may include a five-lobe torque transmission system shown by example of the cross-section in FIG. 7, or may be a four-lobe torque transmission system shown by example of the cross-section in FIG. 8. In one application, a small fastener having a major thread diameter less than about 1.0 millimeter (0.039 inch) may utilize a four-lobe torque transmission system.

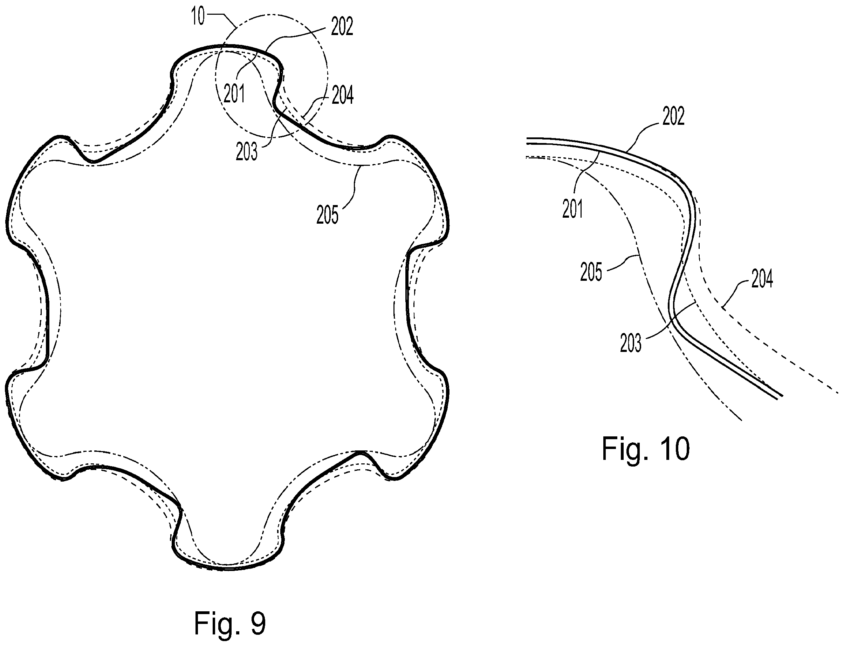

Referring to FIGS. 9 AND 10, it is illustrated in the outline of the six lobe torsion driver and the recess of the fastener similar to that shown in FIGS. 1, 2 and 3 by curves 201 and 202. It is also shown by curves 203 and 204 is a prior spline type six lobe fastener and torsion driver of the type described in U.S. Patent 5,279,190 and commercialized as the TORX PLUS^{®} Drive System. Also shown as a curve 205 is a prior spline type six lobe torque driver and fastener as described in U.S. Patent 3,584,667 and commercialized as the TORX^{®} Drive System. As can be seen from FIGS. 7 and 8, the present drive system provides for much closer clearances between the bit portion of the torsion driver and the configuration in the head portion of the fastener, providing for much more rapid an higher torsions applied to the fastener by the system. Further, FIGS. 7 and 8 illustrate that the torsion driver of the present system can be utilized to tighten six lobe fasteners of the TORX^{®} and the TORX PLUS^{®} drive systems, however, six lobe drivers of the TORX PLUS^{®} spline type torsion drive systems may not be used with the torsion drive system of the present invention.

The present torque transmission drivers may be steel or aluminum as desired for the application. In one alternative, the steel is a medium carbon steel, such as AISI S2, 6150, 8650, 8660, or other tool steel compositions or alloy steel compositions as desired for hardenability and strength. The medium carbon steel may be hardened after the driver is made. After the torque transmission driver is formed, the steel driver may be hardened to a hardness of 58-62 HRC. Alternatively, the steel driver may be hardened to a hardness greater than 52 HRC.

While certain embodiments have been described, it must be understood that various changes may be made and equivalents may be substituted without departing from the scope of the present invention as defined by the claims.

## Claims

1. A fastener (10; 110) for use in a torque transmitting system comprising:
a fastener (10; 110) having a drive end portion (16; 116) and a lead end portion (12), the drive end portion adapted to engage a torque transmission driver (20; 120) and the lead end portion (12) adapted to fasten or unfasten the fastener (10; 110),
the drive end portion (16; 116) comprising a series of four, five or six lobes (24; 124) and troughs (26; 126) about a rotational axis, and
a drive side transition (36; 136) between each lobe (24; 124) and trough (26; 126) on only one side of each lobe (24; 124) forming a negative drive angle (α) between -3° and -10°, and preferably between -4° and -6°,
wherein the drive side transition (36; 136) extends between an outer transition radius (46; 146) and an inner transition radius (48; 148),
wherein the drive angle (α) is measured between the drive side transition (36; 136) and a radial line (28'; 128') extending from the rotational axis and tangent to the inner transition radius (48),
**characterized in that** the drive side transition (36; 136) of each lobe (24; 124) with said negative drive angle (α;θ) has a length between the lobe (24; 124) and trough of the fastener (10; 110) ranging from 20 and 40% of difference between radii A and B, where A is the outer radius of a lobe (24; 124) and B is inner radius of a trough (26; 126).

2. The fastener claimed in claim 1 where the fastener (10; 110) has a major thread diameter less than 1.6 millimeter, preferably less than 1.0 millimeter.

3. The fastener claimed in claim 1 where the drive end portion (16; 116) of the fastener (10; 116) has externally configured drive surfaces adapted to engage a torque transmission driver (20; 120).

4. The fastener claimed in claim 1 where the drive end portion (16; 116) of the fastener (10; 110) has internally configured drive surfaces adapted to engage a torque transmission driver (20; 120).

5. A torque transmission driver (20; 120) comprising:
a main body having a first end portion and a second end portion,
the first end portion adapted to receive and transmit torque from a torque generation source,
the second end portion (22; 122) opposite the first end portion comprising a series of four, five or six lobes (30; 130) and troughs (32; 132) about a rotational axis, and
a drive side transition (34; 134) between each lobe (30; 130) and trough (32; 132) on only one side of each lobe (30; 130) forming a negative drive angle (θ) between -3° and -10°, and preferably between -4° and -6°,
wherein the drive side transition (34; 134) extends between an outer transition radius (42; 142) and an inner transition radius (44; 144),
wherein the drive angle (θ) is measured between the drive side transition (34; 134) and a radial line (28; 128) extending from the rotational axis and tangent to the inner transition radius (44, 144),
**characterized in that** the drive side transition (34; 134) of each lobe (30; 130) with said negative drive angle (α; θ) has a length along the lobe (30; 130) of the driver (20; 120) between 20 and 40% of difference between the A and B radii, where A is the outer radius of a lobe and B is inner radius of a trough (32; 132).

6. The torque transmission driver claimed in claim 5 where the second end portion of the driver is adapted to engage a fastener having a major thread diameter less than 1.6 millimeter, preferably less than 1.0 millimeter.

7. The torque transmission driver claimed in claim 5 where the drive side transition (34; 134) of each lobe (30; 130) with said negative drive angle (α; θ) has a length between 0.025 and 0.5 millimeter along the lobe (30; 130) of the driver (20; 120).

8. The torque transmission driver claimed in claim 5 where the second end portion (22; 122) of the driver (20; 120) has externally configured drive surface adapted to engage a fastener (10; 110).

9. The torque transmission driver claimed in claim 5 where the second end portion (22; 122) of the driver (20; 120) has internally configured drive surface adapted to engage a fastener (10; 110).

10. System comprising a fastener (10; 110) as claimed in one of claims 3 or 4 and a torque transmission driver (20; 120) as claimed in one of claims 8 or 9 where clearance between the drive end portion of the fastener (10; 110) and the second end portion of the torque transmission driver (20; 120) is less than 0.05 millimeter.

## Patentansprüche

1. Befestigungsmittel (10; 110) zur Verwendung in einem Momentübertragungssystem, das aufweist:
ein Befestigungsmittel (10; 110) mit einem Antriebsendabschnitt (16; 116) und einem Führungsendabschnitt (12), wobei der Antriebsendabschnitt zum Eingreifen eines Momentübertragungsschraubers (20; 120) angepasst ist und wobei der Führungsendabschnitt (12) zum Befestigen oder Lösen des Befestigungsmittels (10; 110) angepasst ist, wobei der Antriebsendabschnitt (16; 116) eine Reihe von vier, fünf oder sechs Zähnen (24; 124) und Mulden (26; 126) um eine Rotationsachse herum aufweist, und
einen Antriebsseitenübergang (36; 136) zwischen jedem Zahn (24; 124) und jeder Mulde (26; 126) auf lediglich einer Seite von jedem Zahn (24; 124), der einen negativen Antriebswinkel (α) zwischen -3° und -10°, und vorzugsweise zwischen -4° und -6°, bildet,
wobei sich der Antriebsseitenübergang (36; 136) zwischen einem äußeren Übergangsradius (46; 146) und einem inneren Übergangsradius (48; 148) erstreckt,
wobei der Antriebswinkel (α) zwischen dem Antriebsseitenübergang (36; 136) und einer radialen Linie (28'; 128') gemessen wird, die sich von der Rotationsachse erstreckt und die tangential zu dem inneren Übergangsradius (48) ist,
**dadurch gekennzeichnet, dass** der Antriebsseitenübergang (36; 136) jedes Zahns (24; 124) mit dem negativen Antriebswinkel (α; θ) eine Länge zwischen dem Zahn (24; 124) und der Mulde des Befestigungsmittels (10; 110) aufweist, die von 20 und 40% einer Differenz zwischen Radien A und B reicht, wobei A der äußere Radius eines Zahns (24; 124) und B ein innerer Radius einer Mulde (26; 126) ist.

2. Befestigungsmittel, wie im Anspruch 1 beansprucht, wobei das Befestigungsmittel (10; 110) einen Hauptgewindedurchmesser von kleiner als 1,6 Millimeter, vorzugsweise kleiner als 1,0 Millimeter, aufweist.

3. Befestigungsmittel, wie in Anspruch 1 beansprucht, wobei der Antriebsendabschnitt (16; 116) des Befestigungsmittels (10; 116) extern eingerichtete Antriebsflächen aufweist, die zum Eingreifen eines Momentübertragungsschraubers (20; 120) angepasst sind.

4. Befestigungsmittel, wie in Anspruch 1 beansprucht, wobei der Antriebsendabschnitt (16; 116) des Befestigungsmittels (10; 110) intern eingerichtete Antriebsflächen aufweist, die zum Eingreifen eines Momentübertragungsschraubers (20; 120) angepasst sind.

5. Momentübertragungsschrauber (20; 120), der aufweist:
einen Hauptkörper mit einem ersten Endabschnitt und einem zweiten Endabschnitt, wobei der erste Endabschnitt zum Aufnehmen und Übertragen eines Moments von einer Momenterzeugungsquelle angepasst ist, wobei der zweite Endabschnitt (22; 122) gegenüberliegend zum ersten Endabschnitt eine Reihe von vier, fünf oder sechs Zähnen (30; 130) und Mulden (32; 132) um eine Rotationsachse herum aufweist, und
einen Antriebsseitenübergang (34; 134) zwischen jedem Zahn (30; 130) und jeder Mulde (32; 132) auf lediglich einer Seite von jedem Zahn (30; 130), der einen negativen Antriebswinkel (θ) zwischen -3° und -10°, und vorzugsweise zwischen -4° und -6°, bildet,
wobei sich der Antriebsseitenübergang (34; 134) zwischen einem äußeren Übergangsradius (42; 142) und einem inneren Übergangsradius (44; 144) erstreckt,
wobei der Antriebswinkel (θ) zwischen dem Antriebsseitenübergang (34; 134) und einer radialen Linie (28; 128) gemessen wird, die sich von der Rotationsachse erstreckt und die tangential zum inneren Übergangsradius (44, 144) ist,
**dadurch gekennzeichnet, dass** der Antriebsseitenübergang (34; 134) jedes Zahns (30; 130) mit dem negativen Antriebswinkel (α; θ) eine Länge entlang des Zahns (30; 130) des Schraubers (20; 120) zwischen 20 und 40% einer Differenz zwischen den Radien A und B aufweist, wobei A der äußere Radius eines Zahns und B ein innerer Radius einer Mulde (32; 132) ist.

6. Momentübertragungsschrauber, wie in Anspruch 5 beansprucht, wobei der zweite Endabschnitt des Schraubers zum Eingreifen eines Befestigungsmittels mit einem Hauptgewindedurchmesser von kleiner als 1,6 Millimeter, vorzugsweise kleiner als 1,0 Millimeter, angepasst ist.

7. Momentübertragungsschrauber, wie in Anspruch 5 beansprucht, wobei der Antriebsseitenübergang (34; 134) jedes Zahns (30; 130) mit dem negativen Antriebswinkel (α; θ) eine Länge zwischen 0,025 und 0,5 Millimeter entlang des Zahns (30; 130) des Schraubers (20; 120) aufweist.

8. Momentübertragungsschrauber, wie in Anspruch 5 beansprucht, wobei der zweite Endabschnitt (22; 122) des Schraubers (20; 120) eine extern eingerichtete Antriebsfläche aufweist, die zum Eingreifen eines Befestigungsmittels (10; 110) angepasst ist.

9. Momentübertragungsschrauber, wie in Anspruch 5 beansprucht, wobei der zweite Endabschnitt (22; 122) des Schraubers (20; 120) eine intern eingerichtete Antriebsfläche aufweist, die zum Eingreifen eines Befestigungsmittels (10; 110) angepasst ist.

10. System, das ein Befestigungsmittel (10; 110), wie in einem der Ansprüche 3 oder 4 beansprucht, und einen Momentübertragungsschrauber (20; 120), wie in einem der Ansprüche 8 oder 9 beansprucht, aufweist, wobei ein Spiel zwischen dem Antriebsendabschnitt des Befestigungsmittels (10; 110) und dem zweiten Endabschnitt des Momentübertragungsschraubers (20; 120) kleiner als 0,05 Millimeter ist.

## Revendications

1. Pièce de fixation (10 ; 110) pour l'utilisation dans un système de transmission de couple, comprenant :
une pièce de fixation (10 ; 110) ayant une partie d'extrémité d'entraînement (16; 116) et
une partie d'extrémité avant (12), la partie d'extrémité d'entraînement étant adaptée pour entrer en prise avec un dispositif d'entraînement à transmission de couple (20 ; 120) et la partie d'extrémité avant (12) étant adaptée pour fixer ou défaire la pièce de fixation (10 ; 110),
la partie d'extrémité d'entraînement (16 ; 116) comprenant une série de quatre, cinq ou six lobes (24 ; 124) et creux (26; 126) autour d'un axe de rotation, et
une transition côté entraînement (36 ; 136) entre chaque lobe (24 ; 124) et creux (26 ; 126) sur seulement un côté de chaque lobe (24 ; 124) formant un angle d'entraînement négatif (α) entre -3° et -10°, et de préférence entre -4° et -6°,
dans laquelle la transition côté entraînement (36 ; 136) s'étend entre un rayon de transition extérieur (46; 146) et un rayon de transition intérieur (48 ; 148),
dans laquelle l'angle d'entraînement (α) est mesuré entre la transition côté entraînement (36 ; 136) et une ligne radiale (28' ; 128') s'étendant depuis l'axe de rotation et tangente au rayon de transition intérieur (48),
**caractérisée en ce que**
la transition côté entraînement (36; 136) de chaque lobe (24 ; 124) avec ledit angle d'entraînement négatif (α; θ) a une longueur entre le lobe (24 ; 124) et le creux de la pièce de fixation (10 ; 110) variant de 20 et 40 % de différence entre des rayons A et B, où A est le rayon extérieur d'un lobe (24 ; 124) et B est le rayon intérieur d'un creux (26 ; 126).

2. Pièce de fixation selon la revendication 1, où la pièce de fixation (10 ; 110) a un diamètre de filet nominal inférieur à 1,6 millimètres, de préférence inférieur à 1,0 millimètre.

3. Pièce de fixation selon la revendication 1, où la partie d'extrémité d'entraînement (16 ; 116) de la pièce de fixation (10 ; 116) a des surfaces d'entraînement configurées de façon externe adaptées pour entrer en prise avec un dispositif d'entraînement à transmission de couple (20 ; 120).

4. Pièce de fixation selon la revendication 1, où la partie d'extrémité d'entraînement (16 ; 116) de la pièce de fixation (10 ; 110) a des surfaces d'entraînement configurées de façon interne adaptées pour entrer en prise avec un dispositif d'entraînement à transmission de couple (20 ; 120).

5. Dispositif d'entraînement à transmission de couple (20 ; 120), comprenant :
un corps principal ayant une première partie d'extrémité et une seconde partie d'extrémité,
la première partie d'extrémité étant adaptée pour recevoir et transmettre un couple provenant d'une source de génération de couple,
la seconde partie d'extrémité (22 ; 122) opposée à la première partie d'extrémité comprenant une série de quatre, cinq ou six lobes (30 ; 130) et creux (32 ; 132) autour d'un axe de rotation, et une transition côté entraînement (34; 134) entre chaque lobe (30 ; 130) et
creux (32 ; 132) sur seulement un côté de chaque lobe (30 ; 130) formant un angle d'entraînement négatif (θ) entre -3° et -10°, et de préférence entre -4° et -6°,
dans lequel la transition côté entraînement (34 ; 134) s'étend entre un rayon de transition extérieur (42 ; 142) et un rayon de transition intérieur (44 ; 144),
dans lequel l'angle d'entraînement (θ) est mesuré entre la transition côté entraînement (34 ; 134) et une ligne radiale (28 ; 128) s'étendant depuis l'axe de rotation et tangente au rayon de transition intérieur (44, 144),
**caractérisé en ce que**
la transition côté entraînement (34 ; 134) de chaque lobe (30 ; 130) avec ledit angle d'entraînement négatif (α ; θ) a une longueur le long du lobe (30 ; 130) du dispositif d'entraînement (20 ; 120) entre 20 et 40 % de différence entre les rayons A et B, où A est le rayon extérieur d'un lobe et B est le rayon intérieur d'un creux (32 ; 132).

6. Dispositif d'entraînement à transmission de couple selon la revendication 5, où la seconde partie d'extrémité du dispositif d'entraînement est adaptée pour entrer en prise avec une pièce de fixation ayant un diamètre de filet nominal inférieur à 1,6 millimètres, de préférence inférieur à 1,0 millimètre.

7. Dispositif d'entraînement à transmission de couple selon la revendication 5, où la transition côté entraînement (34 ; 134) de chaque lobe (30 ; 130) avec ledit angle d'entraînement négatif (α ; θ) a une longueur entre 0,025 et 0,5 millimètre le long du lobe (30 ; 130) du dispositif d'entraînement (20 ; 120).

8. Dispositif d'entraînement à transmission de couple selon la revendication 5, où la seconde partie d'extrémité (22 ; 122) du dispositif d'entraînement (20; 120) a une surface d'entraînement configurée de façon externe adaptée pour entrer en prise avec une pièce de fixation (10 ; 110).

9. Dispositif d'entraînement à transmission de couple selon la revendication 5, où la seconde partie d'extrémité (22 ; 122) du dispositif d'entraînement (20; 120) a une surface d'entraînement configurée de façon interne adaptée pour entrer en prise avec une pièce de fixation (10 ; 110).

10. Système comprenant une pièce de fixation (10 ; 110) selon l'une des revendications 3 ou 4, et un dispositif d'entraînement à transmission de couple (20 ; 120) selon l'une des revendications 8 ou 9 où un jeu entre la partie d'extrémité d'entraînement de la pièce de fixation (10 ; 110) et la seconde partie d'extrémité du dispositif d'entraînement à transmission de couple (20 ; 120) est inférieur à 0,05 millimètre.
